# EUROPÄISCHE PATENTANMELDUNG

(11) **EP 1 209 488 A2**
(43) Veröffentlichungstag der Anmeldung: **29.05.2002**
(21) Anmeldenummer: 01000654.2
(22) Anmeldetag: 23.11.2001
(51) Int. Cl.: G01T 1/00, G01T 1/20

(54) **Röntgendetektormodul**

(30) Priorität: 27.11.2000 DE 10058810
(71) Anmelder: Philips Corporate Intellectual Property GmbH, 52064 Aachen (DE); Koninklijke Philips Electronics N.V., 5621 BA Eindhoven (NL)
(72) Erfinder: Wieczorek, Herfried, c/o Philips Corp. Intell. Pro, 52064, Aachen (DE)
(74) Vertreter: Volmer, Georg, Dipl.-Ing.

(57) **Zusammenfassung**

Die Erfindungbetrifft ein Röntgendetektormodul (1), bei dem durch einen vorzugsweise metallischen Träger (3) röhrenförmige Zellen (4) gebildet werden, in denen sich eine Mischung aus einem Binder (7) und aus Szintillatorpartikeln (6) befindet. Von den Szintillatorpartikeln (6) absorbierte Röntgenstrahlung (X) führt zur Emission von Licht einer größeren Wellenlänge (λ₁, λ₂), welches an einem Detektor (5) am Fußende der Zellen (4) nachgewiesen werden kann. Um die Lichtausbeute möglichst hoch zu halten, wird ein Unterschied der Brechungsindices zwischen dem Binder (7) und den Szintillatorpartikeln (6) von weniger als 20% angestrebt und/oder es werden nanokristalline Szintillatorpartikel (6) mit einer Größe zwischen 1 und 100 nm verwendet. Vorzugsweise sind die Zellwände (3,3') in Einfallsrichtung der Röntgenstrahlung verlängert, um ein Antistreugitter oberhalb des Detektors auszubilden.

## Beschreibung

Die Erfindung betrifft ein Röntgendetektormodul enthaltend einen Träger, der gitterförmig angeordnete Zellen bildet und aus einem für Röntgenstrahlung im Wesentlichen undurchlässigen Material besteht. Ferner betrifft sie ein Verfahren zur Herstellung eines solchen Röntgsndetektormoduls.

Röntgendetektoren für den Einsatz in der Medizin und in der zerstörungsfreien Werkstoffprüfung werden im Allgemeinen in der Form strukturierter Röntgenabsorber und den einzelnen Pixeln des Röntgenabsorbers zugeordneter Detektoren hergestellt. In den Röntgenabsorbern werden die nachzuweisenden Photonen der Röntgenstrahlung von dem Szintillatormaterial absorbiert und in Form von sichtbarem oder ultraviolettem Licht reemittiert. Die Photonen dieses Lichtes können dann in den Detektoren nachgewiesen und räumlich dem entsprechenden Pixel des Röntgenabsorbers zugeordnet werden. Bei den Detektoren kann es sich zum Beispiel um Photodioden, Avalanche-Dioden oder Photomultiplier handeln.

Gerade bei großformatigen Röntgendetektoren der genannten Art ist jedoch die Herstellung des in Pixel unterteilten Detektorfeldes sehr aufwendig Die Fläche eines solchen Röntgendetektors kann je nach Anwendung zwischen 100 × 3 cm² (Computertomograph) oder 30 × 40 cm² (Fluoroskopie, Radiologie) betragen. Die Größe der einzelnen Pixel liegt dabei im Bereich von 0.03 - 30 mm². Die Anzahl der Pixel je Detektor liegt im Bereich von Tausend bis zu mehreren Millionen Pixeln.

Für eine geringe Anzahl von Detektorpixeln ist prinzipiell der Aufbau aus einzelnen Szintillatorkristallen als Röntgenabsorbern und zwischen den Kristallen liegenden Absorberblechen möglich. Die Absorberbleche dienen der Strukturierung des Röntgendetektors in einzelne Zellen und der Verhinderung des optischen Übersprechens und des Crosstalks zwischen den Zellen durch Röntgen-Fluoreszenzquanten. Die von den Absorberblechen definierten Zellen legen somit die Größe eines Pixels im Röntgendetektormodul fest.

Bis zu einer Größenordnung von Tausenden von Pixeln ist es prinzipiell möglich, strukturierte Szintillatorkristalle herzustellen, indem größere Scheiben aus Szintillatorkristallen zersägt und die einzelnen Szintillatorstäbe abwechselnd mit Absorbermaterialien wie zum Beispiel reflektierend beschichteten Metallfolien zu eindimensional strukturierten Arrays zusammengefügt werden. Auch eine zweidimensionale Strukturierung ist auf diese Weise möglich, wobei jedoch ein zweiter Verfahrensschritt notwendig ist. Die Herstellung derartiger Arrays ist daher äußerst fehlerbehaftet und sehr teuer. Für eine große Anzahl einzelner Pixel mit einer Größe unterhalb 1 mm ist dieses Verfahren deshalb in der Praxis nicht mehr anwendbar.

Aus der US 5,981,959 ist ein Röntgendetektormodul bekannt, bei welchem durch eine Gießtechnik eine Mischung bestehend aus einem Binder, aus einem Lösemittel und aus Szintillatorpartikeln in eine spezielle Form gebracht wird, bei welcher ausgehend von einer Basisfläche des Materials sich senkrecht von dieser Fläche erstreckende Säulen des Szintillatormaterials entstehen. Nach Absorption eines Röntgenquants in einer derartigen Säule werden ein oder mehreren Lichtquanten einer größeren Wellenlänge isotrop emittiert, von welchen viele durch Reflexion an der Wand der Säule in Richtung auf ein der Säule zugeordnetes Detektorelement gelenkt und dort nachgewiesen werden. Auf dem Weg von der Säule des Szintillatormaterials zum Detektorelement kann jedoch eine erhebliche Ablenkung und Streuung des Lichtquants auftreten, so dass dieses räumlich nur mit geringerer Genauigkeit seinem Entstehungsort zugeordnet werden kann. Weiterhin ist die Herstellung solcher Detektormodule durch die aufwendige Ätzung oder andersartige Erzeugung der Säulen des Szintillatormaterials sehr aufwendig und damit teuer.

Vor diesem Hintergrund war es Aufgabe der vorliegenden Erfindung, ein kostengünstig herstellbares Röntgendetektormodul bereitzustellen, mit welchem eine gute Ortsauflösung der nachzuweisenden Röntgenstrahlung möglich ist.

Diese Aufgabe wird durch ein Röntgendetektormodul mit den Merkmalen der Ansprüche 1, 2 und/oder 11 sowie durch ein Verfahren mit den Merkmalen des Anspruchs 12 gelöst. Vorteilhafte Ausgestaltungen sind in den Unteransprüchen enthalten.

Das Röntgendetektormodul enthält demnach einen Träger, welcher gitterförmig angeordnete Zellen bildet und aus einem für Röntgenstrahlung im Wesentlichen undurchlässigen Material besteht. Durch die gitterförmig in einer Reihe oder in mehreren Reihen nebeneinander angeordneten Zellen wird eine eindimensionale oder zweidimensionale Struktur des Röntgendetektormoduls ausgebildet. In den Zellen befindet sich eine Masse, welche einen Binder mit darin eingebetteten Szintillatorpartikeln enthält, wobei die Szintillatorpartikel nach Absorption eines Röntgenquants Licht im Bereich einer größeren Wellenlänge λ emittieren.

Gemäß einer ersten Ausgestaltung des Röntgendetektormoduls sind die Materialien für den Binder und für die Szintillatorpartikel so gewählt, dass der Unterschied zwischen dem optischen Brechungsindex n_{S}(λ) der Szintillatorpartikel für die Wellenlänge λ und dem optischen Brechungsindex n_{B}(λ) des Binders für die Wellenlänge λ weniger als 20%, vorzugsweise weniger als 10% beträgt. Besonders bevorzugt ist es, wenn die Brechungsindices von Szintillatorpartikeln und Binder im Wesentlichen gleich groß sind.

Ein solches Röntgendetektormodul kann kostengünstig hergestellt werden und erlaubt gleichzeitig die Realisierung hoher Auflösungen, das heißt geringer Pixelgrößen. Dieser Erfolg ist dadurch möglich, dass ein Pulver aus Szintillatorpartikeln oder eine Szintillatorflüssigkeit verwendet werden, mit welchen in einfacher Weise die in einem Träger ausgebildeten Zellen gefüllt werden können. Es ist daher nicht mehr nötig, Szintillatorkristalle in kleine Teile zu zersägen und diese Teile einzeln mit einer Absorberwand zu umgeben. Zu beachten ist dabei jedoch, dass die Szintillatorpartikel die reemittierten Photonen des Lichtes streuen können, was insbesondere bei hohen Schichtdicken der Szintillatormasse zu Vielfachreflexionen und teilweiser Absorption an den Szintillatorkristallen und an den Wänden der Zelle und damit zur Auslöschung des Signals führt. Diese Probleme werden bei dem oben erläuterten Röntgendetektormodul dadurch gelöst, dass der Unterschied zwischen den Brechungsindices von Szintillatorpartikeln und Binder auf maximal 20% begrenzt wird. Es hat sich gezeigt, dass bei Einhaltung dieser Grenze die genannten Störeffekte hinreichend klein gehalten werden können. Je kleiner dabei der Unterschied der Brechungsindices ist, desto geringer sind die Störeffekte und desto höher können die Signale des Röntgendetektormoduls sein.
Der Binder enthält vorteilhafterweise einen Anteil von TiO₂, das insbesondere in Form von Rutil oder Anatas vorliegt, und/oder einen Anteil von ZnO, ZnS, ZrO₂, BaSO₄ und/oder PbCO₃. Der Anteil dieser Substanzen am gesamten Bindermaterial beträgt vorzugsweise 50 Gew.-% bis 95 Gew.-%. Durch die genannten Substanzen ist es möglich, eine organische Substanz wie insbesondere ein Polymer als Basissubstanz des Binders zu wählen und durch entsprechend hohe Anteile der Zusatzstoffe wie zum Beispiel des TiO₂ den Brechungsindex des resultierenden Gemisches so hoch einzustellen, dass er dem Brechungsindex der Szintillatorpartikel möglichst nahe kommt.

Gemäß einer anderen Ausgestaltung des Röntgendetektormoduls, welches wie oben erläutert aus einem Zellen bildenden Träger und einer in den Zellen angeordneten Mischung aus einem Binder und Szintillatorpartikeln besteht, weisen die Szintillatorpartikel eine Korngröße von weniger als 200 nm, vorzugsweise von weniger als 100 nm, besonders bevorzugt weniger als 50 nm auf. Insbesondere kann die Korngröße der Szintillatorpartikel zwischen 1 und 50 nm liegen. Bei den Szintillatorpartikeln handelt es sich demnach um sogenannte Nanopartikel. Durch die Verwendung solcher Nanopartikel ist es möglich, die störende Streuung von reemittierten Lichtphotonen in der Szintillatormasse der Zellen hinreichend klein zu halten, so dass trotz hoher Schichtdicke der Szintillatormasse eine gute Signalhöhe des Röntgendetektormoduls erhalten wird.

Besonders bevorzugt ist es dabei, wenn der Unterschied zwischen den Brechungsindices zwischen dem nanokristallinen Szintillatorpulver und dem umgebenden Binder weniger als 20%, insbesondere weniger als 10% beträgt. In diesem Falle trägt sowohl die Kleinheit der Szintillatorpartikel als auch der geringe Unterschied der Brechungsindices zu einer Reduzierung der Störeffekte bei.

Der die Zellen des Röntgendetektormoduls bildende Träger besteht vorzugsweise aus einem Metall, aus einem mit Metall gefüllten Kunststoff und/oder aus photostrukturierbarem Glas. Bei photostrukturierbarem Glas handelt es sich um Glas, welches durch Belichtungs- und Ätzverfahren in eine gewünschte dreidimensionale Struktur gebracht werden kann. Durch derartige Prozesse können insbesondere im Träger die Zellen des Röntgendetektormoduls erzeugt werden. Wenn der Träger ein Metall enthält oder aus Metall besteht, weist dieses die gewünschten Reflexions- und Absorptionseigenschaften für das reemittierte Licht auf. Insbesondere verhindert ein Träger aus derartigem Material ein optisches Übersprechen und einen Crosstalk durch Röntgen-Fluoreszenzquanten.

Die Oberflächen des Trägers können zumindest teilweise mit einer Reflektorschicht versehen sein, welche für Licht aus dem Bereich der Wellenlänge λ einen Reflexionsgrad von über 90%, vorzugsweise mehr als 97% aufweist. Insbesondere sollten die die Zellwände bildenden Oberflächen des Trägers eine derartige Reflektorschicht aufweisen, damit in der Szintillatormasse erzeugtes Licht von den Wänden der Zellen reflektiert wird und somit für den Nachweisprozess nicht verloren geht. Vorzugsweise besteht die Reflektorschicht aus einem weißen, TiO₂-haltigen Pulver mit einer Schichtdicke von typischerweise 10 bis 50 µm. Alternativ oder zusätzlich kann eine aufgedampfte Metallschicht aus zum Beispiel Silber Ag, Aluminium Al oder dergleichen verwendet werden. Letzteres ist insbesondere für strukturiertes Glas von Vorteil.

Gemäß einer bevorzugten Ausgestaltung der Erfindung beträgt das Volumen der Szintillatorpartikel ca. 50 bis 70% des Volumens der in den Zellen angeordneten Masse aus Binder und Szintillatorpartikeln. Die Schichtdicke der genannten Masse beträgt vorzugsweise je nach Anwendung 0.1 bis 5 mm. Die Schichtdicke wird dabei in Richtung der einfallenden Röntgenstrahlung gemessen.

Die Zellen des Trägers des Röntgendetektormoduls können unterschiedliche Formen aufweisen, welche sich durch das gewünschte Absorptions- und Emissionsverhalten sowie den angewendeten Herstellungsprozess ergeben. Vorzugsweise ist die Form der Zellen dabei in Richtung der einfallenden Röntgenstrahlung länglich, das heißt die Breite der Zellen in Richtung quer zur einfallenden Röntgenstrahlung beziehungsweise quer zur Ebene der Anordnung der Zellen gemessen ist kleiner als die Höhe der Zellen, welche in Richtung der einfallenden Röntgenstrahlung gemessen wird Insbesondere kann die Breite der Zellen 10 bis 50%, besonders bevorzugt etwa ein Drittel der Höhe betragen.

Als Material für die Szintillatorpartikel kommen Selten-Erd-Oxide oder Oxisulfide mit Praseodym Pr, Cer Ce, Terbium Tb und/oder Europium Eu als Dotierung in Frage, insbesondere Gd₂O₂S:Pr, Gd₂(SO₄)O:Ce (GOS, GSO). Zu den Selten-Erd-Metallen gehören dabei Scandium Sc, Yttrium Y, Lanthan La und die Lanthanoide. Weiterhin kommen Alkalihalogenide wie CsI:Tl, CsI:Na oder Nal:Tl und/oder CdWO₄ als Material für die Szintillatorpartikel in Betracht.

Die nach Absorption eines Röntgenquants emittierte Strahlung im Bereich sichtbaren Lichts lässt sich von entsprechenden Detektoren nachweisen, so dass mit diesen ein indirekter Nachweis des Röntgenquants und dessen Lokalisierung möglich ist. Zu diesem Zweck kann auf einer Seite mindestens einer Zelle ein Detektor zur Umwandlung von Photonen aus dem Bereich der Wellenlänge λ in ein elektrisches Signal angeordnet sein. Insbesondere kann der Detektor dabei ein Teil eines CMOS-Chips oder eines a-Si:H-Detektors sein. Vorzugsweise ist jeder Zelle des Röntgendetektormoduls ein Detektor zugeordnet, welcher separat elektronisch auslesbar ist.

Die Erfindung betrifft weiterhin ein Röntgendetektormodul, welches insbesondere in einer der oben erläuterten Weisen ausgestaltet sein kann, und das einen Träger enthält, der gitterförmig angeordnete Zellen bildet und aus einem für Röntgenstrahlung im Wesentlichen undurchlässigen Material besteht. Die Zellen sind dabei röhrenförmig ausgebildet, und ein Teilvolumen der Zellen enthält ein Szintillatormaterial. Unter "röhrenförmiger Ausbildung" einer Zelle ist zu verstehen, dass die Seitenwände der Zelle in einer Richtung parallel verlaufen, so dass die Zelle aus dieser Richtung gesehen offen ist. Die Querschnittsfläche der Zellen kann quasi beliebig sein, wobei sie jedoch vorzugsweise kompakt und rund oder mehreckig ist. Dadurch, dass nur ein Teilvolumen der Zellen Szintillatormaterial enthält, kommt ein Abschirmungseffekt zustande, bei welchem die über das Szintillatormaterial überstehenden parallelen Seitenwände der Zellen als Antistreugitter (ASG) wirken. Das heißt, dass schräg zur Verlaufsrichtung der Seitenwände einfallende Röntgenstrahlung mit großer Wahrscheinlichkeit auf die Seitenwände des Trägers trifft und dort absorbiert wird, bevor sie das Szintillatormaterial erreicht. Auf das Szintillatormaterial trifft dagegen nur nahezu parallel zur Achse der Zelle einfallende Röntgenstrahlung. Durch Ausrichtung der Achsen der Zellen auf die Quelle der Röntgenstrahlung kann somit erreicht werden, dass im Wesentlichen nur direkte Röntgenstrahlung im Szintillatormaterial nachgewiesen wird, während aus Streuprozessen resultierende sekundäre Röntgenstrahlung überwiegend einen schrägen Einfallswinkel hat und daher durch vorzeitige Absorption an den Wänden der Zellen aussortiert wird. Ein derartiges Röntgendetektormodul vereinigt die Funktionen einer Detektorstruktur und eines Antistreugitters in sich, wobei die exakte räumliche Zuordnung von Szintillator und Antistreugitter per Konstruktion gewährleistet ist.

Die Erfindung betrifft weiterhin ein Verfahren zur Herstellung eines Röntgendetektormoduls gemäß einer der oben erläuterten Ausgestaltungen, wobei in einem nasschemischen Beschichtungsverfahren eine fließfähige Mischung aus einem Binder und aus Szintillatorpartikeln in die vorbereiteten Zellen eines Trägers eingebracht wird. Anschließend wird die Mischung durch thermische Behandlung, durch UV-Bestrahlung oder durch ähnliche Prozesse ausgehärtet und verdichtet. Die Schritte des Einbringens der Mischung und der Verdichtung können so oft wie nötig wiederholt werden, um eine gewünschte Schichtdicke zu erhalten. Wenn die Temperaturen bei dem Verfahren hinreichend niedrig gehalten werden, kann die nasschemische Herstellung unmittelbar auf dem unter dem Träger liegenden Detektorsubstrat (zum Beispiel CMOS-Chip oder a-Si:H-Detektor) erfolgen.

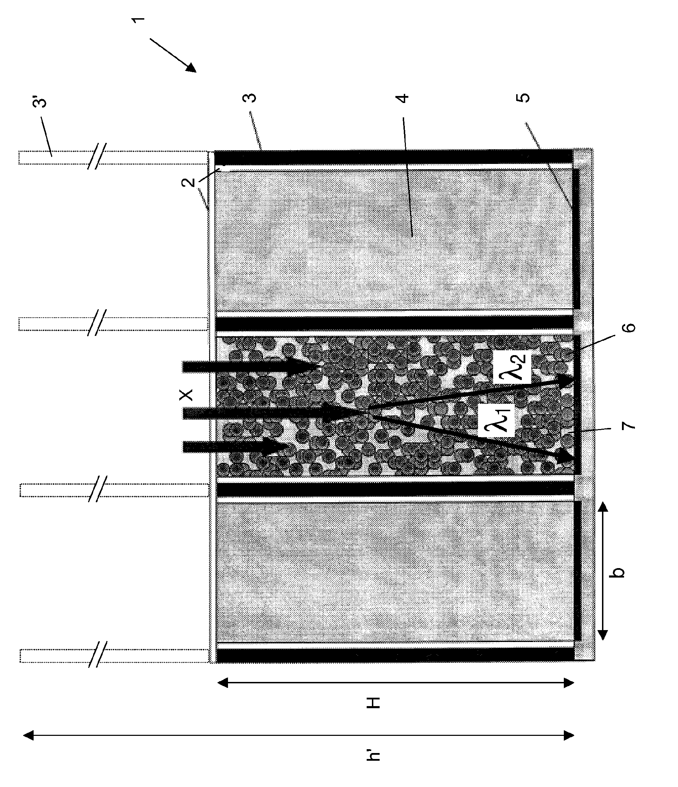

Im Folgenden wird die Erfindung mit Hilfe der Figur beispielhaft erläutert. Die einzige Abbildung zeigt schematisch einen Querschnitt durch drei repräsentative Zellen eines erfindungsgemäßen Röntgendetektormoduls.

Das Röntgendetektormodul 1 wird durch in einer Gitterstruktur angeordnete Zellen 4 gebildet. Die Gitterstruktur wird dabei durch einen Träger erzeugt, welcher die in der Figur vertikalen Zellwände 3 aufweist, die die einzelnen Zellen 4 voneinander trennen. Die Zellen 4 haben eine Säulen- oder röhrenförmigs Gestalt mit runder oder vorzugsweise mehreckiger, insbesondere rechteckiger Querschnittsfläche, wobei die Höhe h der Zellen etwa das Dreifache der Breite b der Zellen beträgt. Innerhalb der Zellen 4 ist eine Matrix aus einem Binder 7 und darin eingebetteten Szintillatorpartikeln 6 angeordnet, welche in der mittleren Zelle durch Kugeln grafisch veranschaulicht sind

Bei seinem Einsatz wird das Röntgendetektormodul 1 relativ zur in der Figur vertikal von oben nach unten zeigenden Einfallsrichtung der nachzuweisenden Röntgenstrahlung X so angeordnet, dass sich das durch die Zellen 4 gebildete Feld (Array) quer zu dieser Einfallsrichtung der Strahlen X erstreckt. Die Röntgenstrahlung X (dicke Pfeile) kann somit durch die obere offene Stirnfläche der röhrenförmigen Zellen 4 in das Innere der Zellen einfallen. Dort werden die Röntgenquanten von den Szintillatorpartikeln 6 absorbiert. Nach Absorption eines Röntgenquants emittiert das Szintillatormaterial ein oder mehrere Photonen (dünne Pfeile), deren Wellenlängen λ₁, λ₂ im Bereich des sichtbaren Lichtes liegen. Ein Teil dieses Lichtes erreicht den am unteren Stirnende der Zelle 4 angeordneten Detektor 5, wo das Licht ein elektrisches Signal erzeugt. Dieses Signal wird in bekannter Weise elektronisch erfasst und stellt einen Hinweis auf die Absorption des Röntgenquants X in der zugehörigen Zelle des Röntgendetektormoduls dar.

Um möglichst viel des reemittierten Lichtes der Wellenlängen λ zum Detektor 5 gelangen zu lassen, sind die Innenflächen der Wände 3 des Trägers sowie die Oberflächen des Röntgendetektormoduls 1, die den Detektoren 5 gegenüberliegen, mit einer Reflexionsschicht 2 beschichtet. Diese Reflexionsschicht besteht vorzugsweise aus einem TiO₂-haltigen Pulver mit einer Schichtdicke von ca. 10 bis 50 µm. Der Träger 3 besteht vorzugsweise aus einem Metall, und die Szintillatorpartikel 6 bestehen vorzugsweise aus GOS (Gd₂O₂S:Pr).

Das reemittierte Licht der Wellenlängen λ unterliegt auf seinem Weg innerhalb der Zelle 4 Streuprozessen an den Szintillatorpartikeln 6. Um diese Streuprozesse möglichst gering zu halten, werden die Materialien von Binder 7 und Szintillatorpartikeln 6 so gewählt, dass der Unterschied zwischen ihren Brechungsindices für das Licht im Bereich der reemittierten Wellenlängen λ weniger als 20%, besonders bevorzugt weniger als 10% beträgt.

Idealerweise wären die Brechungsindices sogar genau gleich groß. Die gewünschte Angleichung der Brechungsindices kann zB. dadurch erfolgen, dass als Binder ein Polymer mit einem entsprechend hohen TiO₂ Anteil verwendet wird.

Zusätzlich und/oder alternativ kann ein nanokristallines Szintillatorpulver verwendet werden, bei dem die Größe der Teilchen 6 zwischen 1 nm und 100 nm liegt. Durch die Angleichung der Brechungsindices und/oder die Verwendung von Nanopartikeln bei der Ausgestaltung des Röntgendetektormoduls 1 kann erreicht werden, dass ein wesentlicher Anteil des Lumineszenzlichtes aus einer Zelle 4 (Pixel) zum Detektor 5 ausgekoppelt werden kann, so dass sich ein ausreichend hohes Signal am Detektor ergibt.

Gemäß einer Weiterbildung des Röntgendetektormoduls könnten die Wände bzw. Gitterstege 3 des Trägers, welche die Zellen 4 voneinander trennen, auch mit einer größeren Höhe h' ausgebildet sein, so dass sie nach oben über die Füllung mit dem Szintillatormaterial 6, 7 überstehen (gestrichelte Linien in der Figur). Der überstehende Teil 3' der Gitterwände 3 würde dann als Antistreugitter wirken, das heißt schräg einfallende Röntgenstrahlung X absorbieren und nur die im Wesentlichen parallel zu den Wänden einfallende Strahlung bis zum Szintillatormaterial durchlassen. Eine solche höhere Ausbildung der Gitterstege realisiert in einfacher Weise eine Verbindung von Szintillator und Antistreugitter, wobei die räumliche Zuordnung der beiden Elemente exakt gewährleistet ist.

## Patentansprüche

1. Röntgendetektormodul (1),
enthaltend einen Träger (3), der gitterförmig angeordnete Zellen (4) bildet und aus einem für Röntgenstrahlung im Wesentlichen undurchlässigen Material besteht,
wobei in den Zellen (4) eine Masse von in einen Binder (7) eingebetteten Szintillatorpartikeln (6), die nach Absorption von Röntgenstrahlung Licht im Bereich einer größeren Wellenlänge λ emittieren, angeordnet ist,
und wobei der Unterschied zwischen dem Brechungsindex der Szintillatorpartikel (6) und dem Brechungsindex des Binders (7) für die Wellenlänge λ weniger als 20%, vorzugsweise weniger als 10% beträgt.

2. Röntgendetektormodul nach Anspruch 1,
**dadurch gekennzeichnet,**
**dass** der Binder TiO₂, insbesondere in Form von Rutil oder Anatas, und/oder einen Anteil von ZnO, ZnS, ZrO₂, BaSO₄ und/oder PbCO₃ enthält.

3. Röntgendetektormodul, insbesondere nach Anspruch 1 oder 2,
enthaltend einen Träger (3), der gitterförmig angeordnete Zellen (4) bildet und aus einem für Röntgenstrahlung im Wesentlichen undurchlässigen Material besteht,
wobei in den Zellen (4) eine Masse von in einen Binder (7) eingebetteten Szintillatorpartikeln (6), die nach Absorption von Röntgenstrahlung Licht im Bereich einer größeren Wellenlänge λ emittieren, angeordnet ist,
und wobei die Szintillatorpartikel (6) eine Korngröße von weniger als 200 nm, vorzugsweise weniger als 100 nm aufweisen.

4. Röntgendetektormodul nach mindestens einem der Ansprüche 1 bis 3,
**dadurch gekennzeichnet,**
**dass** der Träger (3) aus Metall, einem mit Metall gefüllten Kunststoff und/oder photostrukturierbarem Glas besteht.

5. Röntgendetektormodul nach mindestens einem der Ansprüche 1 bis 4,
**dadurch gekennzeichnet,**
**dass** die Oberfläche des Trägers (3) zumindest teilweise mit einer Reflektorschicht (2) versehen ist, die für Licht aus dem Bereich der Wellenlänge λ einen Reflexionsgrad von über 90% aufweist.

6. Röntgendetektormodul nach mindestens einem der Ansprüche 1 bis 5,
**dadurch gekennzeichnet,**
**dass** das Volumen der Szintillatorpartikel (6) 50% bis 70% des Volumens der in den Zellen (4) angeordneten Masse beträgt.

7. Röntgendetektormodul nach mindestens einem der Ansprüche 1 bis 6,
**dadurch gekennzeichnet,**
**dass** die Höhe (h) der in den Zellen (4) eingebetteten Masse 0.1 mm bis 5 mm beträgt.

8. Röntgendetektormodul nach mindestens einem der Ansprüche 1 bis 7,
**dadurch gekennzeichnet,**
**dass** die in der Ebene der Anordnung der Zellen (4) bestimmte Breite (b) der Zellen (4) kleiner als die Höhe (h) der Zellen ist.

9. Röntgendetektormodul nach mindestens einem der Ansprüche 1 bis 8,
**dadurch gekennzeichnet,**
**dass** die Szintillatorpartikel (6) Selten-Erd-Oxide oder Oxisulfide mit Pr, Ce, Tb und/oder Eu als Dotierung, insbesondere Gd₂O₂S:Pr oder Gd₂(SO₄)O:Ce, und/oder Alkalihalogenide wie CsI:Tl, CsI:Na oder Nal:Tl und/oder CdWO₄ enthalten.

10. Röntgendetektormodul nach mindestens einem der Ansprüche 1 bis 9,
**dadurch gekennzeichnet,**
**dass** auf einer Seite von mindestens einer Zelle (4) ein Detektor (5) zur Umwandlung von Photonen aus dem Bereich der größeren Wellenlänge λ in eine elektrisches Signal angeordnet ist.

11. Röntgendetektormodul, insbesondere nach einem der Ansprüche 1 bis 10, enthaltend einen Träger (3, 3'), der gitterförmig angeordnete Zellen (4) bildet und aus einem für Röntgenstrahlung im Wesentlichen undurchlässigen Material besteht, wobei die Zellen (4) röhrenförmig sind und nur ein Teilvolumen der Zellen ein Szintillatormaterial (6, 7) enthält.

12. Verfahren zur Herstellung eines Röntgendetektormoduls (1) nach mindestens einem der Ansprüche 1 bis 11,
wobei mindestens einmal eine fließfähige Mischung aus einem Binder (7) und aus Szintillatorpartikeln (6) in die Zellen (4) eines Trägers (3) eingebracht und anschließend durch thermische Behandlung und/oder durch UV-Bestrahlung verdichtet wird.
